# EUROPÄISCHE PATENTSCHRIFT

(11) **EP 1 831 283 B1**
(45) Veröffentlichungstag und Bekanntmachung des Hinweises auf die Patenterteilung: **26.09.2012**
(21) Anmeldenummer: 05818827.7
(22) Anmeldetag: 09.12.2005
(51) Int. Cl.: C08G 64/24

(54) **VERFAHREN ZUR HERSTELLUNG VON POLYCARBONATEN**
METHOD FOR PRODUCING POLYCARBONATES
PROCEDE DE PRODUCTION DE POLYCARBONATES

(30) Priorität: 22.12.2004 DE 102004061715
(43) Veröffentlichungstag der Anmeldung: 12.09.2007
(73) Patentinhaber: Bayer MaterialScience AG, 51368 Leverkusen (DE)
(72) Erfinder: KAUTH, Hermann, 47803 Krefeld (DE); EBERT, Wolfgang, 4800 Krefeld (DE); HAESE, Wilfried, 51519 Odenthal (DE); EINBERGER, Helmut, 51519 Odenthal (DE); MEYER, Alexander, 40237 Düsseldorf (DE); FRANKENAU, Andreas, 47906 Kempen (DE); FRANZ, Uli, 40699 Erkrath (DE); EH, Christian, Chonburi, 20230 (TH); DE VOS, Stefaan, Rayong, 21150 (TH); RUYTINX, Bert, B-3545 Halen (BE)
(86) Internationale Anmeldenummer: PCT/EP2005/013213
(87) Internationale Veröffentlichungsnummer: WO 2006/072343

(56) Entgegenhaltungen:
- EP-A- 1 216 982
- EP-A- 1 426 396
- DE-A1- 4 239 131
- US-A- 4 737 573

## Beschreibung

Gegenstand der vorliegenden Erfindung ist ein Verfahren zur Herstellung von Polycarbonaten nach dem sogenannten Phasengrenzflächenverfahren, wobei die Polycarbonate nach Verseifung einen geringen Gehalt an Carbamat-Verbindungen enthalten.

Das Phasengrenzflächenverfahren ist allgemein aus der Literatur bekannt und beispielsweise in EP-A 517 044 beschrieben.

Die so hergestellten Polycarbonate besitzen einen mehr oder weniger hohen Anteil an Carbamat-Verbindungen, was zu einer Fehlstruktur und damit zu einer Qualitätseinbuße des Trägermaterials für optische Speichermedien wie CD, DVD o.ä. führt.

Die Kalibrierung erfolgt nach externer Standard-Methode (Mehrpunktkalibrierung).

Die Aufgabe bestand daher darin einen Prozess, bevorzugt einen kontinuierlichen Prozess, zur Herstellung von Polycarbonaten zu finden, der zu Polycarbonaten mit einem geringen Gehalt an Carbamat-Verbindungen und damit zu einer deutlich gesteigerten Ausbeute an qualitativ hochwertigen optischen Speicherdisks führt.

Polycarbonate, die nach Verseifung der Carbonatgruppen einen höheren Gehalt an Carbamat-Verbindungen aufweisen, sind für die Herstellung von optischen Speichern, insbesondere von beschreibbaren optischen Speichern, von Nachteil, da die Ausbeute infolge von ungleichmäßigem Aufbringen der informationstragenden Schicht, meist Farbstoffen, absinkt. Weiterhin zeigt sich, dass bei der Produktion von Audio-CD's und DVDs Behinderungen durch Zusammenhaften der Disks im Herstellungsprozess, meist noch vor der Beschichtung, erfolgen.

Die Aufgabe wird dadurch gelöst, dass ein spezielles Verfahren, bevorzugt ein kontinuierliches Verfahren, zur Herstellung von Polycarbonaten gefunden wurde, das es ermöglicht Polycarbonate mit einem geringen Gehalt an den unten beschriebenen Verbindungen herzustellen.

Gegenstand der vorliegenden Erfindung ist daher ein kontinuierliches Verfahren zur Herstellung von Polycarbonaten mit einem Gehalt von 0,25 ppm bis 180 ppm, besonders bevorzugt 2,4 ppm bis 120 ppm, gemessen nach Hydrolyse der Carbonatstrukturen, an Verbindungen der Formel (1) 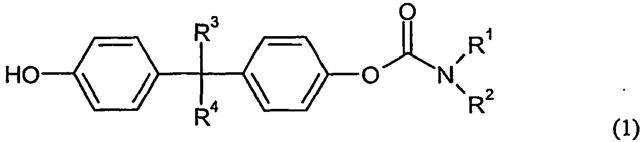 worin
- R¹ und R²: unabhängig voneinander Wasserstoff oder C₁-C₁₂-Alkyl, vorzugsweise Methyl, Ethyl, Propyl, Isopropyl oder Butyl oder
- R¹ und R²: gemeinsam C₄-C₁₂-Alkyliden, vorzugsweise C₄-C₈-Alkyliden, besonders bevorzugt C₄-C₅-Alkyliden bedeuten,
- R³ und R⁴: unabhängig voneinander für Wasserstoff, C₁-C₁₂-Alkyl, vorzugsweise C₁-C₈-Alkyl, oder Phenyl stehen oder R³ und R⁴ mit dem Kohlenstoffatom, an das sie gebunden sind, Cyclohexyl oder Trimethylcyclohexyl bilden,
dadurch gekennzeichnet, dass im Phosgenierungsschritt die Temperatur 0 bis 40°C und die Temperatur des Reaktionsgemisches zum Zeitpunkt der Katalysatorzugabe 10 bis 40°C beträgt, der Katalysator in Lösung vorliegt und das Verhältnis der Mole Bisphenol zu Mole Phosgen 1:1,05 bis 1:1,20 beträgt.

Die Messung des Gehaltes der Verbindungen gemäß Formel (1) im Polycarbonat nach alkalischer Hydrolyse wird wie folgt durchgeführt:
500 mg Polycarbonat werden in 20 g Tetrahydrofuran (THF) mit 1,91 g 32 %iger Natronlauge und 5 g Wasser versetzt und über Nacht (mind. 15 Stunden bei Raumtemperatur) unter Schütteln verseift. Nach Verseifen wird die Lösung mit Salzsäure angesäuert und mit THF auf 50 ml aufgefüllt. In die High Pressure Liquid Chromatographie (HPLC) werden 15 µl injiziert. Die Detektion erfolgt wahlweise mit DAD (Dioden-Array-Detektor), FLD (Fluoreszenzdetektor) oder MS (Massenspektrometrie).

Gemäß dem vielfach beschriebenen Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches ein zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Im erfindungsgemäßen Verfahren wird eine wässrige Phase aus NaOH, einem oder mehreren Bisphenolen und Wasser verwendet, wobei die Konzentration dieser wässrigen Lösung bezüglich der Summe der Bisphenole, nicht als Natriumsalz sondern als freies Bisphenol gerechnet, zwischen 10 bis 25 Gew-% für Polycarbonate, vorzugsweise 12 bis 20 Gew-% bei einem Mw < 45000 des entstehenden Polycarbonates, variieren kann. Dabei kann es bei höheren Konzentrationen notwendig sein, die Lösungen zu temperieren. Das zur Lösung der Bisphenole verwendete Natriumhydroxid kann fest oder als wässrige Natronlauge verwendet werden. Die Konzentration der Natronlauge richtet sich nach der Zielkonzentration der angestrebten Bisphenolatlösung, liegt aber in der Regel zwischen 3 und 45 Gew.-%, bevorzugt 5 und 35 Gew. Bei dem Verfahren mit anschlie-βender Verdünnung werden Natronlaugen mit Konzentrationen zwischen 15 und 75 Gew. %, bevorzugt 25 und 55 Gew.-%, gegebenenfalls temperiert, verwendet. Der Alkaligehalt pro mol Bisphenol ist von der Struktur des Bisphenols abhängig, bewegt sich aber in der Regel zwischen 0,25 mol Alkali / mol Bisphenol und 5,00 mol Alkali / mol Bisphenol, bevorzugt 1,5 - 2,5 Mol Alkali / mol Bisphenol und im Fall, dass Bisphenol A als alleiniges Bisphenol verwendet wird, zwischen 1,85 - 2,15 mol Alkali. Wird mehr als ein Bisphenol verwendet, so können diese zusammen gelöst werden. Es kann jedoch vorteilhaft sein, die Bisphenole getrennt in optimaler alkalischer Phase zu lösen und die Lösungen getrennt zu dosieren oder aber vereinigt der Reaktion zuzuführen. Weiterhin kann es von Vorteil sein, das oder die Bisphenole nicht in Natronlauge sondern in mit zusätzlichem Alkali ausgestatteter, verdünnter Bisphenolatlösung zu lösen. Die Lösevorgänge können von festem Bisphenol, meist in Schuppen oder Prillform oder auch von geschmolzenem Bisphenol ausgehen. Das eingesetzte Natriumhydroxid bzw. die Natronlauge kann nach dem Amalgamverfahren oder dem sogenannten Membranverfahren hergestellt worden sein. Beide Verfahren werden seit langer Zeit benutzt und sind dem Fachmann geläufig. Bevorzugt wird Natronlauge aus dem Membranverfahren verwendet.

Die so angesetzte wässrige Phase wird zusammen mit einer organischen Phase bestehend aus Lösungsmitteln für Polycarbonat, die gegenüber den Reaktanten inert sind und eine zweite Phase bilden, phosgeniert.

Die gegebenenfalls praktizierte Dosierung von Bisphenol nach oder während der Phosgeneinleitung kann so lange durchgeführt werden, wie Phosgen in der Reaktionslösung vorhanden ist oder dessen unmittelbare Folgeprodukte, die Chlorkohlensäureester.

Die erfindungsgemäße Herstellung von Polycarbonaten aus Bisphenolen und Phosgen im alkalischen Milieu ist eine exotherme Reaktion und wird in einem Temperaturbereich von 0°C bis 40°C, bevorzugt 5°C bis 36°C durchgerührt, wobei je nach Lösungsmittel oder Lösungsmittelgemisch gegebenenfalls unter Überdruck gearbeitet wird.

Für die Herstellung von Polycarbonaten sind geeignete Dihydroxyarylverbindungen solche der Formel (3)

HO-Z-OH (3)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (3) für einen Rest der Formel (4) 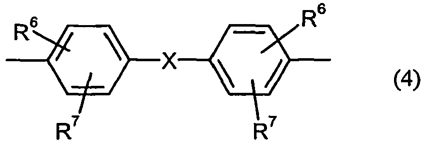 in der
- R⁶ und R⁷: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (4a) oder (4b) 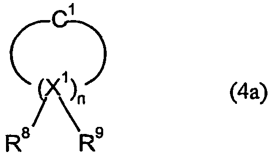 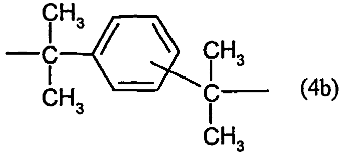 wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und
- n: eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Für die Herstellung der Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl) propan, 1,1-Bis-(4-hydroxyphenyl)-cyclohexan und 1,1-Bis-(4-hydroxyphenyl)-3,3,5-trimethylcyclohexan (Bisphenol TMC)..

Diese und weitere geeignete Diphenole sind z.B. in den US-A -PS 2 999 835, 3 148 172, 2 991 273, 3 271 367, 4 982 014 und 2 999 846, in den deutschen Offenlegungsschrifien 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle der Copolycarbonate werden mehrere Diphenole eingesetzt, wobei die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die organische Phase kann aus einem oder Mischungen mehrerer Lösungsmittel bestehen. Geeignete Lösungsmittel sind chlorierte Kohlenwasserstoffe (aliphatische und/oder aromatische), wie Dichlormethan, Trichlorethylen, 1,1,1-Trichlorethan, 1,1,2- Trichlorethan und Chlorbenzol, bevorzugt Methylenchlorid und Chlorbenzol und deren Gemische.

Die beiden Phasen die das Reaktionsgemisch bilden werden gemischt, um die Reaktion zu beschleunigen. Das geschieht durch Eintrag von Energie über Scherung, d.h. Pumpen oder Rührer oder durch statische Mischer bzw. durch Erzeugung turbulenter Strömung mittels Düsen und/oder Blenden. Auch Kombinationen dieser Massnahmen werden angewendet, oft auch wiederholt in zeitlicher oder apparativer Abfolge. Als Rührer werden bevorzugt Anker-, Propeller-, MIG-Rührer, usw. eingesetzt, wie sie z.B. im Ullmann, "Encyclopedia of Industrial Chemistry", 5. Auflage, Vol B2, S. 251 ff. beschrieben sind. Als Pumpen werden Kreiselpumpen, oft auch mehrstufige, wobei 2 bis 9stufige bevorzugt sind, eingesetzt. Als Düsen und/oder Blenden werden Lochblenden bzw. an deren Stelle verjüngte Rohrstücke oder auch Venturi- oder Lefosdüsen eingesetzt.

Der Eintrag des Phosgens kann gasförmig oder flüssig oder gelöst in Lösungsmittel erfolgen. Während der verwendete Überschuss an Phosgen, bezogen auf die Summe der eingesetzten Bisphenole, bei der üblichen Polycarbonatsynthese zwischen 3 und 100 Mol %, bevorzugt zwischen 5 und 50 Mol %, liegt; ist das erfindungsgemäße Verfahren von Phosgenüberschüssen von 5 bis 20 Mol%, bevorzugt 8 bis 17 Mol% gekennzeichnet. Der pH-Wert der wässrigen Phase wird über einmalige oder mehrfache Nachdosierung von Natronlauge oder entsprechende Nachdosierung von Bisphenolatlösung während und nach der Phosgendosierung im alkalischen Bereich, bevorzugt zwischen 8,5 und 12 gehalten, während er nach der Katalysatorzugabe bei 10 bis 14 liegen sollte.

Die Temperatur während der Phosgenierung beträgt üblicherweise 25 bis 85°C, bevorzugt 35 bis 85°C, im erfindungsgemäßen Verfahren jedoch 0°C bis 40°C, bevorzugt 5°C bis 36°C.

Die Phosgendosierung kann direkt in das beschriebene Gemisch der organischen und wässrigen Phase erfolgen oder aber auch ganz oder teilweise, vor der Mischung der Phasen, in eine der beiden Phasen, die anschließend mit der entsprechenden anderen Phase gemischt wird. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von 1 Sekunde bis 5 min, bevorzugt 3 Sekunden bis 2 Minuten dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgeführten Teilstrom gemischt. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung eingehalten werden.

Die Durchführung der Polycarbonatsynthese kann kontinuierlich oder diskontinuierlich geschehen. Die Reaktion kann in daher in Rührkesseln, Rohrreaktoren, Umpumpreaktoren oder Rührkesselkaskaden gegebenenfalls unter Verwendung von Dosierungen durch Düsen oder deren Kombinationen erfolgen, wobei durch Verwendung der bereits erwähnten Mischorgane sicherzustellen ist, daß wässrige und organische Phase sich möglichst erst dann entmischen, wenn das Synthesegemisch ausreagiert hat, d.h. kein verseifbares Chlor von Phosgen oder Chlorkohlensäureestern mehr enthält. Die Nachreaktion des Reaktionsgemisches kann dann in Rührkesseln und / oder Rohrreaktoren, gegebenenfalls parallel geschalteten erfolgen. Bevorzugt ist eine Kontireaktion, besonders eine solche die einen Umpumpreaktors als Phosgenierreaktor und nachgeschaltete Rohrreaktoren verwendet.

Die zur Regelung des Molekulargewichtes benötigten monofunktionellen Kettenabbrecher, wie Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde. Wobei die Dosierung in Substanz, gegebenenfalls als Schmelze oder als 1 bis 50 Gew%ige Lösung, bevorzugt 5 bis 20 Gew-%ige Lösung vorgenommen wird.

In der gleichen Weise werden eventuell zu verwendende Verzweiger oder Verzweiger-mischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan,

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Die in der Phasengrenzflächensynthese verwendeten Katalysatoren sind tert. Amine, wie z.B. Triethylamin, Tributylamin, Trioctylamin, N-Ethylpiperidin, N-Methylpiperidin, N-i/n-Propylpiperidin; vorzugsweise Triethylamin, Tributylamin oder N-Ethylpiperidin, die gebenenfalls neben quartären Ammoniumsalze wie Tetrabutylammonium- / Tributylbenzylammonium- / Tetraethylammonium- hydroxid / -chlorid / -bromid / -hydrogen-sulfat / -tetrafluoroborat; sowie die den Ammoniumverbindungen entsprechenden Phosphoniumverbindungen, eingesetzt werden können, bevorzugt ist jedoch ein Verfahren in dem nur tert. Amine als Katalysatoren verwendet werden. Diese Verbindungen sind in der Literatur beschrieben, kommerziell erhältlich und dem Fachmann geläufig.

Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe der Onuimverbindung vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen, bevorzugt ist eine Dosierung als Lösung in dem oder den organischen Lösungsmitteln der Polycarbonatsynthese. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %. Wird der Katalysator in Substanz dosiert, so ist eine Fahrweise bevorzugt in der möglichst schnell eine homogene Durchmischung des Synthesegemisches mit dem Katalysator erreicht wird bevorzugt. Beispielsweise Dosierungen in turbulent strömende Emulsionen oder solche mittels dynamischen oder statischen Mischelementen. In jedem Falle ist eine Dosierung des Katalysators nach dem Phosgenierungsreaktor bevorzugt , besonders eine Fahrweise wo der Katalysator an einer Stelle oder zu einem Zeitpunkt zugegeben wird, an der kein Phosgen mehr frei vorliegt, besonders bevorzugt ist eine Dosierung nach der Kettenabbrecherdosierung, möglichst nach 30sec bis 10 min nach der Kettenabbrecherdosierung.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen, insofern sie eingelegt werden, zwischen 10 Sekunden und 60 Minuten, bevorzugt zwischen 30 sec. und 40 Minuten, besonders bevorzugt zwischen 1 und 15 min.

Das ausreagierte, höchstens noch Spuren an (<2 ppm) Chlorkohlensäureestern enthaltende mindestens zweiphasige Reaktionsgemisch lässt man zur Phasentrennung absitzen. Die wässrige alkalische Phase wird evt. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polymer enthaltende Phase muss nun von allen Kontaminationen alkalischer, ionischer oder katalytischer Art gereinigt werden.

Die organische Phase enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie den Katalysator, in der Regel ein tert. Amin.

Nach dieser groben Abtrennung der alkalischen, wässrigen Phase wird die organische Phase ein oder mehrmals mit verdünnten Säuren, Mineral-, Carbon-, Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Massnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene gereinigte Polymerlösung sollte nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polymers aus der Lösung kann durch Verdampfen des Lösungsmittels mittels Temperatur, Vakuum oder eines erhitzten Schleppgases erfolgen. Andere Isolierungsmethoden sind Kristallisation und Fällung.

Geschieht die Konzentrierung der Polymerlösung und eventuell auch die Isolierung des Polymeren durch Abdestillation des Lösungsmittels, gegebenenfalls durch Überhitzung und Entspannung, so spricht man von einem 'Flash-Verfahren" siehe auch "Thermische Trennverfahren", VCH Verlagsanstalt 1988, S. 114; wird statt dessen ein geheiztes Trägergas zusammen mit der einzudampfenden Lösung versprüht, so spricht man von einer 'Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polymerschmelzen. Bei dem bekannten Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen sondern lieber ein zwei- bis vierstufiges Verfahren zu wählen.

Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207), entfernt werden, alternativ auch durch anschließende Kristallisation (DE-A 34 29 960) und Ausheizen der Reste des Lösungsmittels in der festen Phase (US-A 3 986 269, DE-A 20 53 876).

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Bei einer Versprühung wird die Polymerlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive , wie oben beschrieben, in der Peripherie oder dem Extruder selbst, zugesetzt werden. Oftmals muss vor der Extrusion aufgrund der geringen Schüttdichte der Pulver und Flocken ein Kompaktierungsschritt für das Polymerpulver eingesetzt werden.

Aus der gewaschenen und gegebenenfalls noch aufkonzentrierten Lösung des Polycarbonates kann durch Zugabe eines Nichtlösungsmittels für Polycarbonat das Polymer weitgehend kristallin ausgefällt werden. Hierbei ist es vorteilhaft erst eine geringe Menge des Nichtlösers zuzugeben und gegebenenfalls auch Wartezeiten zwischen den Zugaben der Chargen an Nichtlösungsmittel einzulegen. Es kann außerdem von Vorteil serin, verschiedene Nichtlöser einzusetzen. Verwendung als Fällungsmittel finden hier z.B. Kohlenwasserstoffe, insbesondere Heptan, i-Octan, Cyclohexan und Alkohole wie Methanol, Ethanol, i-Propanol.

Bei der Fällung wird in der Regel die Polymerlösung langsam einem Fällungsmittel zugesetzt, hier werden meist Alkohole wie Methanol, Ethanol, i-Propanol., aber auch Cyclohexan oder Aceton verwendet.

Die so erhaltenen Materialien werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Nichtlösungsmittel für Polycarbonat, unter gleichzeitiger Erhitzung unterhalb der Glastemperatur kristallisiert und weiter zu höheren Molekulargewichten auskondensiert. Handelt es sich dabei um Oligomere gegebenenfalls mit unterschiedlichen Endgruppen (Phenolische und Kettenabbrecherenden) so spricht man von Festphasenaufkondensation.

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole
Alkylthiomethylphenole
Hydrochinone und alkylierte Hydrochinone
Tocopherole
Hydroxylierte Thiodiphenylether
Alkylidenbisphenole
O-, N- und S-Benzylverbindungen
Hydroxybenzylierte Malonate,
Aromatische Hydroxybenzylverbindungen,
Triazinverbindungen
Acylaminophenole,
Ester von β-(3,5-Di-tert-butyl-4-hydroxyphenyl)propionsäure
Ester von β-(5-tert-Butyl-4-hydroxy-3-methylphenyl)propionsäure
Ester von β-(3,5-Dicyclohexyl-4-hydroxyphenyl)propionsäure
Ester von 3,5-Di-tert-butyl-4-hydroxyphenylessigsäure
Amide of β-(3,5-Di-tert-butyl-4-hydroxyphenyl)propionsäure,
Geeignete Thiosynergisten
Sekundäre Antioxidantien, Phosphite und Phosphonite
Benzofuranone und Indolinone

Bevorzugt sind organische Phosphite, Phosphonate und Phosphane, meist solche bei denen die organischen Reste völlig oder teilweise aus gegebenenfalls substituierten aromatischen Resten bestehen.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Polymerschmelzen, durch Isolierung des Polymers oder durch Compoundierung erzeugt, werden durch einen Düsenkopf in Strangform abgesponnen, mit Gas, z.B. Luft oder Stickstoff, oder einer Kühlflüssigkeit, meist Wasser, abgekühlt und die erstarrten Stränge in handelsüblichen Granulatoren mit Schneiden die sich z.B. auf einer sich drehenden Walze befinden, in Luft, unter Schutzgas wie Stickstoff oder Argon oder unter Wasser granuliert. Je nach apparativer Ausführung entstehen dabei säulenförmige Granulate mit rundem oder elliptischem Querschnitt und rauher oder glatter Oberfläche. Die Schnittkanten können glatt sein oder glasartigen Bruch aufweisen mit ausgebrochenen Schnittkanten oder aber stehen gebliebenen Resten an den Schnittkanten. Wünschenswert ist ein möglichst gleichmäßig geformtes Granulat mit so wenig wie möglich verbleibenden Überständen an den Schnittkanten. Weiterhin ist der Staubanteil im Granulat möglichst gering zu halten, möglichst unter 100 mg/kg Granulat. Der Durchmesser der Granulatkörner soll zwischen 0,5 mm und 10 mm, bevorzugt zwischen1-8 mm, besonders bevorzugt 3-6 mm liegen. Während die Länge der Granulatkörner zwischen 1-10 mm, bevorzugt zwischen 2-8 mm und das Gewicht zwischen 10-50 mg bevorzugt zwischen 15-30 mg liegen sollte. Bevorzugt ist ein Granulat dessen Verhältnis von Durchmesser, bei elliptischem Querschnitt des mittleren Durchmessers, zur Länge 0,8 bis 1,2 beträgt, besonders bevorzugt eines mit dem Verhältnis von ∼1. Diese Parameter unterliegen Größenverteilungen, bevorzugt sind möglichst enge Verteilungen, also möglichst gleichmä-βig dimensionierte Granulate.

Abkühlung, Abspinnung, Granulierung und der anschließende Transport oder die Förderung des Granulates mit Gas oder Flüssigkeit, und die anschließende Lagerung, gegebenenfalls nach einem Durchmischungs- oder Homogenisierungsprozeß, sind so zu gestalten, dass möglichst trotz der möglicherweise vorhandenen statischen Aufladung keine Verunreinigungen auf die Polymer-, Strang- oder Granulatoberfläche aufgebracht werden, wie beispielsweise Staub, Abrieb aus den Maschinen, aerosolartige Schmiermittel und andere Flüssigkeiten sowie Salze aus möglicherweise verwendeten Wasserbädern oder Kühlungen.

### Beispiele:

Die folgenden Versuche werden mit einem Umpumpreaktor und zwei anschließenden Verweilreaktoren durchgeführt. In den Umpumpreaktor werden die Bisphenolatlösung, das Lösungsmittel und das Phosgen dosiert und zur Reaktion gebracht, wobei die erste Natronlaugemenge ebenfalls in den Umpumpreaktor dosiert wird. Vor dem ersten Verweilreaktor werden die zweite Natronlauge und die Kettenabbrecher-Lösung dosiert. In allen Versuchen wird p.tert.Butylphenol als Kettenabbrecher eingesetzt. Vor dem zweiten Verweilreaktor wird die Katalysator-Lösung dosiert. In allen Versuchen wird N-Ethylpiperidin als Katalysator verwendet.

Nach dem zweiten Verweilreaktor werden die Phasen getrennt, die organische Phase mit ca. 1 gew.-%iger Salzsäure und 5 mal mit Wasser gewaschen. Anschließend wird die Polycarbonatlösung eingeengt, konzentriert und die Schmelze über einen Ausdampfextruder abgesponnen und granuliert.

| **Vergleichsversuch 1** | | |
|---|---|---|
| Natriumbisphenolat-Lösung (14,87 Gew.-% BPA) | kg/h | 750 |
| Alkaligehalt der Bisphenolat-Lösung | %OH | 0,12 |
| Lösemittel, (Methylenchlorid/Chlorbenzol=1:1 Gew.-%) | kg/h | 661 |
| Phosgen | kg/h | 58,85 |
| Erste Natronlaugedosierung (32,02 Gew.-% NaOH) | kg/h | 13,98 |
| Zweite Natronlaugedosierung (32,02 Gew.-% NaOH) | kg/h | 48,84 |
| Kettenabbrecher-Lösung; (11,47 Gew.-% in Methylenchlorid/Chlorbenzol=1:1) | kg/h | 35,2 |
| Katalysator-Lösung; (3,42 Gew.-% in Methylenchlorid/Chlorbenzol=1:1 Gew.-%) | kg/h | 17,71 |
| Temperatur Reaktion | °C | 42 |
| Temperatur Katalysator-Dosierung | °C | 44,3 |
| Verhältnis Bisphenol zu Phosgen | | 1,22 : 1 |

| **Vergleichsversuch 2** | | |
|---|---|---|
| Natriumbisphenolat-Lösung (14,93 Gew.-% BPA) | kg/h | 750 |
| Alkaligehalt der Bisphenolat-Lösung | %OH | 0,12 |
| Lösemittel, (Methylenchlorid/Chlorbenzol=1:1 Gew.-%) | kg/h | 644 |
| Phosgen | kg/h | 56,59 |
| Erste Natronlaugedosierung (32,08 Gew.-% NaOH) | kg/h | 9,99 |
| Zweite Natronlaugedosierung (32,08 Gew.-% NaOH) | kg/h | 29,12 |
| Kettenabbrecher-Lösung; (11,60 Gew.-% in Methylenchlorid/Chlorbenzol=1:1) | kg/h | 34,0 |
| Katalysator-Lösung; (2,69 Gew.-% in Methylenchlorid/Chlorbenzol=1:1 Gew.-%) | kg/h | 32,99 |
| Temperatur Reaktion | °C | 42 |
| Temperatur Katalysator-Dosierung | °C | 41,3 |
| Verhältnis Bisphenol zu Phosgen | | 1,16 : 1 |

| **Versuch 1, erfindungsgemäß** | | |
|---|---|---|
| Natriumbisphenolat-Lösung (14,88 Gew.-% BPA) | kg/h | 750 |
| Alkaligehalt der Bisphenolat-Lösung | %OH | 0,13 |
| Lösemittel, (Methylenchlorid/Chlorbenzol=1:1 Gew.-%) | kg/h | 646 |
| Phosgen | kg/h | 56,40 |
| Erste Natronlaugedosierung (32,02 Gew.-% NaOH) | kg/h | 9,97 |
| Zweite Natronlaugedosierung (32,02 Gew.-% NaOH) | kg/h | 29,27 |
| Kettenabbrecher-Lösung; (11,67 Gew.-% in Methylenchlorid/Chlorbenzol=1:1) | kg/h | 34,18 |
| Katalysator-Lösung; (2,95 Gew.-% in Methylenchlorid/Chlorbenzol=1:1 Gew.-%) | kg/h | 33,01 |
| Temperatur Reaktion | °C | 35 |
| Temperatur Katalysator-Dosierung | °C | 38,4 |
| Verhältnis Bisphenol zu Phosgen | | 1,16 : 1 |

### Ergebnis:

| | Gehalt [ppm] des Carbamats gemäß der allgemeinen Formel (2a) | Mole Bisphenol : Mole Phosgen |
|---|---|---|
| Vergleichsbeispiel 1 | 1017 | 1: 1,22 |
| Vergleichsbeispiel 2 | 586 | 1:1,16 |
| Erfindungsgemäties Beispiel 1 | 48 | 1:1,16 |

Die Versuche zeigen deutlich den Vorteil des erfindungsgemäßen Verfahrens zur Herstellung von Polycarbonaten mit einem niedrigen Gehalt an Verbindungen der Formel 1a

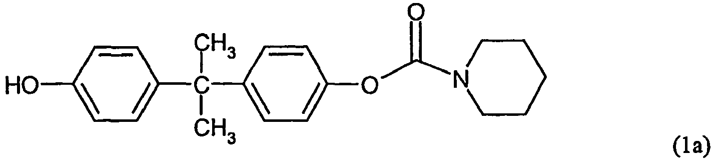

### Messung des Carbamat-Gehaltes:

0,5 g Polycarbonat werden in 20 g THF gelöst, mit 0,19 g 32 %iger Natronlauge und 0,5 g Wasser versetzt und über Nacht (mindestens 15 h) unter Schütteln verseift. Nach Verseifen wird die Lösung mit Salzsäure angesäuert und mit THF auf 5 ml aufgefüllt. In die HPLC werden 15 µl der Lösung injiziert. Die Detektion erfolgt mit FLD.

Die Kalibrierung erfolgt nach externer Standard-Methode (Mehrpunktkalibrierung) mit der Referenzsubstanz aus Beispiel A.

### Beispiel A:

### Herstellung von 1-(4-tert.-Butylphenyloxycarbonyloxy)-1'-(piperidincarbonsäure)-4,4'-isopropylidendiphenylester

9.30 g (0.025 mol) Isopropylidendiphenylbischlorkohlensäureester werden unter Argon in 150 ml Dichlormethan vorgelegt und auf 0°C abkühlt. 48.49 g (0.428 mol) N-Ethylpiperidin werden in 20 ml Dichlormethan gelöst und bei 0°C zur Bischlorkohlensäureester-Lösung bei 0°C hinzugetropft. Zu dieser Lösung werden dann 3.76 g (0.025 mol) tert. Butylphenol gelöst in 10 ml Dichlormethan bei 0°C getropft. Man lässt auf Raumtemperatur erwärmen und rührt für 3 Stunden. Danach wird das Lösungsmittel im Vakuum entfernt. Der Rückstand wird in 500 ml Toluol aufgekocht und heiß abfiltriert. Beim Abkühlen fallen in der Mutterlauge Kristalle aus. Die Mutterlauge wird filtriert und eingeengt (95°C, 25mbar). Man erhält 13,2 g eines hochviskosen roten Öls. Dies wird in 100 ml Ethylacetat gelöst und nach Zugabe von 10 g Kieselgel (Kieselgel 60; 0,04-0,063 µm; Merck 109385/Lt.: 948 785 203) eingeengt und auf eine Kieselgelsäule (Säule ∅ 5 cm, Füllhöhe ca. 25 cm) gegeben. Nach Chromatographie mit einem Lösungsmittelgemisch aus n-Hexan/Ethylacetat: (9:1) erhält man 2.3 g eines glasartigen Feststoffs.
¹H-NMR (400 MHz, CDCl₃) δ = 7.4-7.38 (m, 2 H), 7.28-7.23 (m, 2 H), 7.22-7.13 (m, 6 H), 7.03-6.98 (m, 2 H), 3.65-3.45 (m, 4 H), 1.70-1.55 (m, 6 H), 1.66 (s, 6 H), 1.32 (s, 9 H).

### Herstellung von_Piperidincarbonsäure-4-[1-(4-hydroxyphenyl)-1-methylethyl]-phenylester

0,5 g 1-(4-tert. Butylphenyloxycarbonyloxy)-1'-(piperidincarbonsäure)-4,4'-isopropylidendiphenylester werden in 20 g THF gelöst, mit 0,5 g 32 %iger Natronlauge und 5 g Wasser versetzt und über Nacht (mind. 15 Stunden) unter Schütteln verseift.

### Aufarbeitung:

Die wässrige Phase der THF-Lösung wird abgetrennt, die org. Phase eingeengt. Der Rückstand wird in Diethylether aufgenommen und mehrmals mit Wasser gewaschen. Man trocknet die organische Phase über Magnesiumsulfat, filtriert vom Trocknungsmittel ab und entfernt das Lösungsmittel im Vakuum. Man erhält 1,46 g Rohprodukt, welches an Kieselgel (Kieselgel 60; 0,04-0,063 µm; Merck 109385/Lt.: 948 785 203) mit einem Lösungsmittelgemisch aus Hexan/Ethylacetat (9:1) chromatographiert wird (Säule ∅ 5 cm, Füllhöhe ca. 25 cm). Im weiteren Verlauf wird als Lösungsmittelgemisch Hexan/Ethylacetat (5:1) verwendet. Man erhält 1.0 g eines weißen Feststoffs.
¹H-NMR (400 MHz, CDCl₃) δ = 7.20-7.15 (m, 2 H), 7.10-7.05 (m, 2 H), 7.02-6.95 (m, 2 H), 6.75-6.68 (m, 2 H), 3.65-3.45 (m, 4 H), 1.63 (s, 6 H).

## Patentansprüche

1. Verfahren zur Herstellung von Polycarbonaten mit einem Gehalt von 0,25 ppm bis 180 ppm, gemessen nach Hydrolyse der Carbonatstrukturen, an Verbindungen der Formel (1) 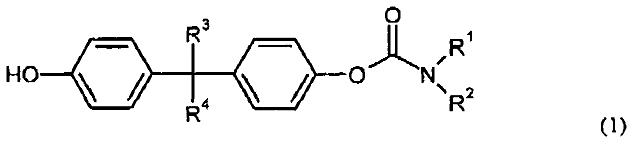 worin
R¹ und R² unabhängig voneinander Wasserstoff oder C₁-C₁₂-Alkyl oder
R¹ und R² gemeinsam C₄-C₁₂-Alkyliden bedeuten,
R³ und R⁴ unabhängig voneinander für Wasserstoff, C₁-C₁₂-Alkyl oder R³ und R⁴ mit dem Kohlenstoffatom, an das sie gebunden sind, Cyclohexyl oder Trimethylcyclohcxyl bilden,
**dadurch gekennzeichnet, dass** im Phosgenierungsschritt die Temperatur 0 bis 40°C und die Temperatur des Reaktionsgemisches zum Zeitpunkt der Katalysatorzugabe 10 bis 40°C beträgt, der Katalysator in Lösung vorliegt und das Verhältnis der Mole Bisphenol zu Mole Phosgen 1:1,05 bis 1:1,20 beträgt und das Verfahren kontinuierlich betrieben wird.

2. Verfahren gemäß Anspruch 1, wobei die Temperatur des Reaktionsgemisches zum Zeitpunkt der Katalysatorzugabe 5 bis 36°C beträgt.

## Claims

1. Process for preparing polycarbonates having a content of 0.25 ppm to 180 ppm, measured after hydrolysis of the carbonate structures, of compounds of the formula (1) 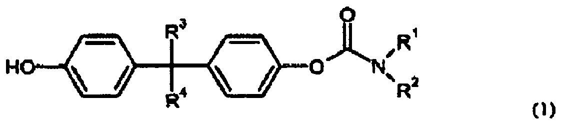 in which
R¹ and R² are each independently hydrogen or C₁-C₁₂-alkyl or
R¹ and R² together are C₄-C₁₂-alkylidene,
R³ and R⁴ are each independently hydrogen, C₁-C₁₂-alkyl, or R³ and R⁴ together with the carbon atom to which they are bonded form cyclohexyl or trimethylcyclohexyl,
**characterized in that**, in the phosgenation step, the temperature is 0 to 40°C and the temperature of the reaction mixture at the time of catalyst addition is 10 to 40°C, the catalyst is in solution and the ratio of moles of bisphenol to moles of phosgene is 1:1.05 to 1:1.20, and the process is operated continuously.

2. Process according to Claim 1, wherein the temperature of the reaction mixture at the time of catalyst addition is 5 to 36°C.

## Revendications

1. Procédé de fabrication de polycarbonates ayant une teneur de 0,25 ppm à 180 ppm, mesurée après l'hydrolyse des structures carbonate, en composés de formule (1) 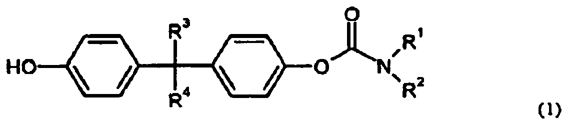 dans laquelle
R¹ et R² signifient indépendamment l'un de l'autre hydrogène ou alkyle en C₁-C₁₂, ou
R¹ et R² signifient ensemble alkylidène en C₄-C₁₂,
R³ et R⁴ signifient indépendamment l'un de l'autre hydrogène, alkyle en C₁-C₁₂, ou R³ et R⁴ forment avec l'atome de carbone auquel ils sont reliés un cyclohexyle ou un triméthylcyclohexyle,
**caractérisé en ce que** la température est de 0 à 40 °C dans l'étape de phosgénation et la température du mélange réactionnel au moment de l'ajout du catalyseur est de 10 à 40 °C, le catalyseur se trouve en solution et le rapport entre les moles de bisphénol et les moles de phosgène est de 1:1,05 à 1:1,20 et le procédé est exploité de manière continue.

2. Procédé selon la revendication 1, dans lequel la température du mélange réactionnel au moment de l'ajout du catalyseur est de 5 à 36 °C.
